# EUROPÄISCHE PATENTSCHRIFT

(11) **EP 1 464 867 B1**
(45) Veröffentlichungstag und Bekanntmachung des Hinweises auf die Patenterteilung: **26.09.2007**
(21) Anmeldenummer: 04004182.4
(22) Anmeldetag: 25.02.2004
(51) Int. Cl.: F16F 9/05, F16F 9/38

(54) **Doppelrollbalg-Luftfeder mit Schmutzfänger**
Double rolling-lobe air spring with dirt collector
Ressort à air à double soufflet roulant avec collecteur de salissures

(30) Priorität: 05.04.2003 DE 10315555
(43) Veröffentlichungstag der Anmeldung: 06.10.2004
(73) Patentinhaber: Continental Aktiengesellschaft, 30165 Hannover (DE)
(72) Erfinder: Gleu, Jens-Uwe, Dr., 30855 Langenhagen (DE)

(56) Entgegenhaltungen:
- US-A- 3 596 895
- US-A- 5 996 980
- US-B1- 6 315 274
- US-B1- 6 637 733
- PATENT ABSTRACTS OF JAPAN Bd. 1995, Nr. 03, 28. April 1995 (1995-04-28) -& JP 06 341478 A (FUJIOKA:KK), 13. Dezember 1994 (1994-12-13)

## Beschreibung

Die Erfindung betrifft eine Doppelrollbalg-Luftfeder mit einem Schmutzfänger - gemäß dem Oberbegriff des Hauptanspruchs.

### Stand der Technik

Bei einfachen Rollbalg-Luftfedern ist der Abrollkolben üblicherweise unterhalb des Rollbalgs angeordnet. Der während des Abrollvorgangs in den Spalt zwischen Kolben und Rollbalg gelangende Schmutz kann wegen seiner nach unten gerichteten Rollfalte kaum haften bleiben. Ein Schmutzfänger zum Schutz der Rollfalte ist deshalb nicht unbedingt erforderlich.

Anders hingegen, wenn der Abrollkolben oberhalb des Rollbalgs angeordnet ist. Dann entsteht an der nach oben gerichteten Rollfalte ein Bereich zwischen Balg und Abrollkontur, in dem sich während des Fahrbetriebs Fremdkörper und Schmutz ansammeln können. Diese beeinträchtigen die Funktion der Luftfeder bzw. führen zur Zerstörung des Luftfederbalges. Damit sich in dieser nach oben gerichteten Rollfalte auf Dauer kein zerstörerisch wirkender Schmutz festsetzen kann, erscheint es hier deshalb unbedingt erforderlich, einen Schmutzfänger vorzusehen.

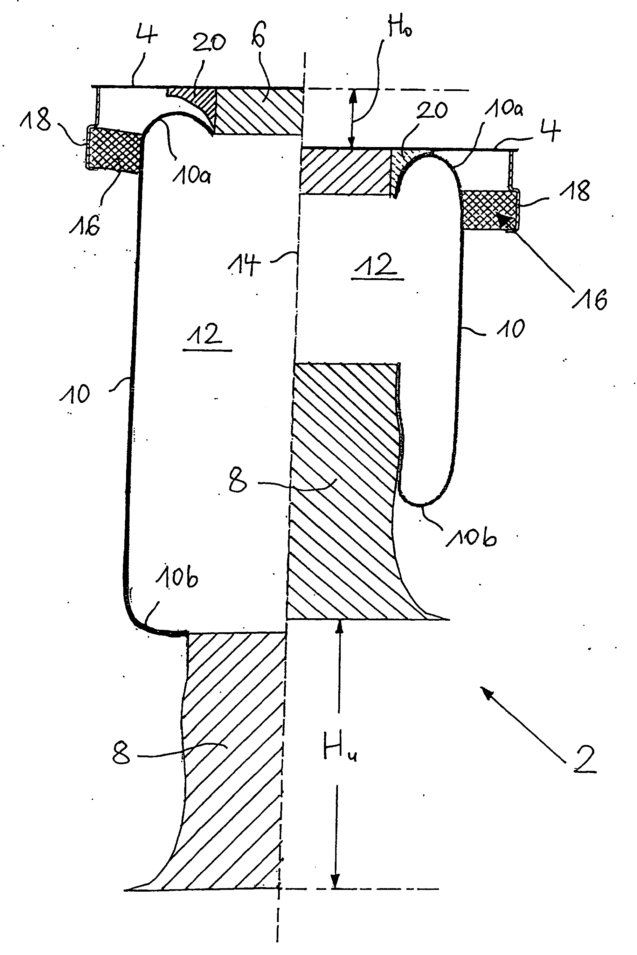

Bei Luftfedern mit einfachem Rollbalg werden als Schmutzabweiser in der Regel Faltenbälge eingesetzt, die den zu schützenden Bereich zwischen der Basis des Abrollkolbens und einer Außenringführung (11) überbrücken (siehe z.B. DE 199 52 919 A1, Fig. 1).

Außer Luftfedern mit einfachem Rollbalg sind Luftfedern mit doppelter Rollfalte bekannt (z. B. US 830,283; Fig. 9).
Doppelrollbalg-Luftfedern weisen in jedem Fall eine nach oben gerichtete Rollfalte auf. Auch hier ist zumindest die nach oben gerichtete Rollfalte vor Schmutz zu schützen.

In der EP 0 250 820 B1 wird eine Doppelrollbalg-Luftfeder beschrieben, wobei der obere Abrollkolben in eine tassenförmige Glocke integriert. Beim Einfederungsvorgang oder generell taucht die obere Rollfalte in den zwischen oberem Abrollkolben und tassenförmiger Glocke vorhandenen Zwischenraum ein.
Eine einwandfreie Schmutzfänger-Funktion ist mit dieser Glocke nicht gegeben.

Die US 4,493,481 beschreibt ebenfalls eine Doppelrollbalg-Luftfeder. Dabei ist die obere Rollfalte gänzlich von einer nach oben geschlossenen Glocke umgeben. Diese Glocke kann zudem als Schmutzfänger angesehen werden.
Der Nachteil besteht darin, dass dieses Konstruktionsprinzip nur auf solche
Doppelrollbalg-Luftfedern anwendbar ist, bei denen eine Glocke vorhanden ist, die gegenüber dem oberen Abrollkolben axial beweglich ist.

Die US 6 315 274 B1 offenbart eine Doppelrollbalg-Luftfeder gemäß des Oberbegriffs der Ansprüche 1 und 5.

### Aufgabe der Erfindung

Die Aufgabe der mit den Patentansprüchen gelösten Erfindung besteht darin, insbesondere die nach oben gerichtete Rollfalte einer Doppel-Rollbalg-Luftfeder in einfacher Weise vor Verschmutzung zu schützen.

### Lösung und Vorteile

Grundsätzlich ist die Aufgabe der Erfindung durch die Verwendung eines Schaumstoffteils als Schmutzfänger gelöst. Hierdurch erfolgt eine Abschirmung des gefährdeten Bereichs gegen größere Partikel aus der Umwelt. Ein Hauptvorteil in der erfindungsgemäßen Verwendung eines Schaumgummi-Schmutzfängers besteht in einer Vereinfachung und damit Verbilligung.

Ein wesentlicher Unterschied zu Einfach-Rollbalg-Luftfedern ist darin zu sehen, dass die einzelnen Rollfalten eines Doppelrollbalges jeweils nur etwa den halben Hub zu bewältigen haben. Aus diesem Grunde kann als Schmutzfänger erfindungsgemäß auf einen teuren Faltenbalg bzw. eine elastische Manschette verzichtet werden.
Andererseits wird aber auch auf einen Schutzbalg verzichtet, der den Außendurchmesser der Luftfeder vergrößert und damit regelmäßig bei gegebenem Baurum den möglichen Rollbalgaußendurchmesser problematisch beschränkt.

Gleichzeitig ist der Schaumgummi-Schmutzisolator teilweise ausgebildeten Schutzbälgen bzw. -kappen, (die also nicht vom Deckel bis zum Kolben reichen und den gesamten Federweg aufzunehmen hätten,) überlegen. Der Vorteil besteht darin, dass ein durch die Elastizität des Schaumgummis erzeugter Anpressdruck den Bereich der oberen Rollfalte schmutz-, aber nicht luftdicht verschließt und gleichzeitig durch die Fahrzeug-Kinematik erzeugte Querbewegungen und durch große Ausfederwege hervorgerufene Relativbewegungen zwischen Balgwand und Schaumgummi zulässt, ohne die Dichtigkeit zu verlieren. Zusätzlich wird dabei durch das gegenüber dem Rollbalg sehr weiche Schaumgummi kein Abrieb am Rollbalg provoziert.

Dieses Schaumstoffteil, das vorzugsweise als Ring geformt ist, kann zwischen Balg und Fahrzeug-Chassis elastisch verpresst liegen und/oder insbesondere als Einlegeteil zwischen dem Balg und einem den Balg umlaufenden Steg ausgebildet sein, der z. B. Bestandteil der Blechkonstruktion der Chassisanbindung, des Überrollringes o. ä. sein kann.
Dabei kann sowohl der Ring als auch der Steg rotationssymmetrisch um die Luftfederlängsachse oder nicht rotationssymmetrisch ausgebildet sein.

Insgesamt ergeben sich mit dem erfindungsgemäßen Schmutzfänger folgende Vorteile:
- Das relativ kompliziert auszuführende Bauteil zur Isolation des gefährdeten Bereiches gegen die Umwelt aus Faltenbälgen oder elastischen Manschetten wird durch ein sehr billiges Bauteil aus geschäumten Elastomer ersetzt.
- Dabei wird durch die Porosität des Schaums die Entlüftungsfunktion nebenbei integriert.
- Durch die speziellen Eigenschaften von Schaumgummi ist eine hohe Elastizität und damit Dichtfunktion in radialer und in Querrichtung realisierbar.
- Durch die speziellen Eigenschaften von Schaumgummi entsteht kein Reibungsund damit Abriebproblem an der Balgaußenseite.
- Durch die speziellen Eigenschaften von Schaumgummi wird eine Zerstörung des Schutzes z. B. durch Steinschlag verhindert.

### Zeichnung

Nachfolgend wird ein Ausführungsbeispiel der Erfindung beschrieben. Die beigefügte Abbildung zeigt die Prinzipdarstellung einer erfindungsgemäßen Luftfeder im Längsschnitt, und zwar links im Bild im ausgefederten, rechts im Bild im eingefederten Zustand.

### Beschreibung

Die erfindungsgemäß weiterentwickelte Luftfeder 2 basiert auf einer herkömmlichen Doppelrollbalg-Luftfeder.
Eine solche Doppelrollbalg-Luftfeder 2 besteht im Wesentlichen aus einem (chassisfesten) Luftfederdeckel 4 mit einem ersten (oberen) Abrollkolben 6 und einem dazu abstandsvariablen, zweiten (unteren) Abrollkolben 8. Am unteren Ende des "oberen" Abrollkolbens 6 und am "oberen" Ende des "unteren" Abrollkolbens 8 ist jeweils ein Ende eines Doppelrollbalgs 10 druckdicht eingespannt. Der Doppelrollbalg 10 umschließt mit den beiden endseitig angebrachten Abrollkolben 6, 8 den volumenveränderlichen Luftfederinnenraum 12.

Beim Einfederungsvorgang erfolgt eine gegenseitige Relativbewegung der beiden Abrollkolben entlang der gemeinsamen Längsachse 14.

Wenn eine solche Luftfeder 2 Downside-Down eingebaut wird, dann entsteht an der oberen Rollfalte 10a ein Bereich zwischen Balg 10 und Abrollkontur, in dem sich im Betrieb Fremdkörper und Schmutz ansammeln können. Diese beeinträchtigen die Funktion der Luftfeder 2 bzw. führen zur Zerstörung des Luftfederbalges 10.

Zur Abschirmung des gefährdeten Bereichs gegen größere Partikel aus der Umwelt sieht die Erfindung die Verwendung eines Schaumstoffteils 16 vor, das gemäß der in der Abbildung dargestellten Ausführungsbeispiels als Ring ausgebildet ist. Dieser Ring 16 befindet sich als Einlegeteil zwischen dem Balg 10 und einem den Balg 10 umlaufenden Steg 18, der Bestandteil einer als Chassisanbindung dienenden Blechkonstruktion ist. Sowohl der Ring 16 als auch der Steg 18 können rotationssymmetrisch um die Luftfederlängsachse 14 oder nicht-rotationssymmetrisch ausgebildet sein.

Der Schaumgummiring 16 ist ortsfest mit dem Deckel 4 verbunden. Durch einen leichten Presssitz gegenüber dem Rollbalg 10 wird ein Auf- und Abrutschen vermieden. Kleinere Relativbewegungen in Quer- und Vertikalrichtung werden elastisch ausgeglichen. Größere vertikale Relativbewegungen des Balges 10 gegen den Halter (Steg 18) des Schaumgummiringes 16 werden durch Gleiten des Schaumgummis 16 auf dem Rollbalg 10 ausgeglichen. Der maximal mögliche Hub Hₒ der "oberen" Rollfalte 10a ist noch größer als links im Bild dargestellt, wird aber regelmäßig nicht ausgenutzt. Der Ring 16 besteht aus offenporigem Schaumgummi. Die Reinhaltung des aus offenporigem Schaumgummi bestehenden Ringes 16 kann z. B. durch ein gespritztes Gummiformteil mit einer geschlossenen Haut erreicht werden.

Statt an einem umlaufenden Steg 18 kann das ringförmige Schaumstoffteil 16 auch am Balg 10 befestigt sein, während es am Chassis (bzw. Deckel 4) elastisch anliegt.

Im vorliegenden Ausführungsbeispiel befindet sich zwischen Deckel 4 und oberem Kolben 6 ein Überrollring 20.

### Bezugszeichenliste

- 2: Luftfeder, Doppelrollbalg-Luftfeder
- 4: (chassisfester) Luftfederdeckel, Deckel
- 6: erster (obere) Abrollkolben, Kolben
- 8: zweiter (unterer) Abrollkolben
- 10: Doppelrollbalg, Luftfederbalg, Rollbalg, Balg
- 10a: "obere" Rollfalte
- 10b: "untere" Rollfalte
- 12: Luftfederinnenraum
- 14: Längsachse, Luftfederlängsachse
- 16: Schaumstoffteil, Ring, Schaumstoffring, Schaumgummi
- 18: Halter (Steg)
- 20: Überrollring
- Hₒ: (maximal möglicher) "obere" Hub
- Hᵤ: (maximal mögliche) _{"}unterer" Hub

## Patentansprüche

1. Doppelrollbalg-Luftfeder (2),
bestehend aus einem - insbesondere chassisfesten - Luftfederdeckel (4), an dem ein erster, "oberer" Abrollkolben (6) befestigt ist, und
einem abstandsvariabel dazu angeordneten zweiten, "unteren" Abrollkolben (8), wobei am "unteren" Ende des "oberen" Abrollkolbens (6) und am "oberen" Ende des "unteren" Abrollkolbens (8) jeweils ein Ende eines Doppelrollbalges (10) druckdicht eingespannt ist, und
einem Schaumstoffteils (16), welches im Bereich der zwischen "oberem" Abrollkolben (6) und Rollbalg (10) vorhandenen "oberen" Rollfalte (10a) angeordnet ist,
**gekennzeichnet durch**
Verwendung des Schaumstoffteils (16) als Schmutzfänger, und **dadurch**,
dass das Schaumstoffteil (16) als Ring ausgebildet ist, der an der Außenwand des Balges (10) befestigt ist und der elastisch am Fahrzeug-Chassis anliegt.

2. Doppelrollbalg-Luftfeder nach einem der Ansprüche 1,
**dadurch gekennzeichnet,**
**dass** das Schaumstoff-Material des Schaumstoffteils (16) offenporig ist.

3. Doppelrollbalg-Luftfeder nach einem der Ansprüche 2 bis 3,
**dadurch gekennzeichnet,**
**dass** der umlaufende Steg (18) Bestandteil der Blechkonstruktion einer Chassisanbindung oder eines Überrollringes (20) ist.

4. Doppelrollbalg-Luftfeder nach Anspruch 2 bis 4,
**dadurch gekennzeichnet,**
**dass** sowohl der Ring (16) als auch der Steg (18) rotationssymmetrisch oder nicht rotationssymmetrisch um die Luftfederlängsachse (14) ausgebildet sind.

5. Doppelrollbalg-Luftfeder (2),
bestehend aus einem - insbesondere chassisfesten - Luftfederdeckel (4), an dem ein erster, "oberer" Abrollkolben (6) befestigt ist, und
einem abstandsvariabel dazu angeordneten zweiten, "unteren" Abrollkolben (8), wobei am "unteren" Ende des "oberen" Abrollkolbens (6) und am "oberen" Ende des "unteren" Abrollkolbens (8) jeweils ein Ende eines Doppelrollbalges (10) druckdicht eingespannt ist, und
einem Schaumstoffteils (16), welches im Bereich der zwischen "oberem" Abrollkolben (6) und Rollbalg (10) vorhandenen "oberen" Rollfalte (10a) angeordnet ist,
**gekennzeichnet durch**
Verwendung eines des Schaumstoffteils (16) als Schmutzfänger, und **dadurch**,
dass das Schaumstoff-Material des Schaumstoffteils (16) offenporig ist.

6. Doppelrollbalg-Luftfeder nach Anspruch 5,
**dadurch gekennzeichnet,**
**dass** das Schaumstoffteil (16) als Einlegeteil zwischen dem Balg (10) und einem um den Balg (10) umlaufenden Steg (18) angeordnet ist.

7. Doppelrollbalg-Luftfeder nach Anspruch 5,
**dadurch gekennzeichnet,**
**dass** das Schaumstoffteil (16) als Ring ausgebildet ist, der an der Außenwand des Balges (10) befestigt ist und der elastisch am Fahrzeug-Chassis anliegt.

8. Doppelrollbalg-Luftfeder nach einem der Ansprüche 5 bis 7,
**dadurch gekennzeichnet,**
**dass** der umlaufende Steg (18) Bestandteil der Blechkonstruktion einer Chassisanbindung oder eines Überrollringes (20) ist.

9. Doppelrollbalg-Luftfeder nach Anspruch 5 oder 8,
**dadurch gekennzeichnet,**
**dass** sowohl der Ring (16) als auch der Steg (18) rotationssymmetrisch oder nicht rotationssymmetrisch um die Luftfederlängsachse (14) ausgebildet sind.

## Claims

1. Double rolling bellows air spring (2),
composed of an air spring cover (4) - which is in particular fixed to the chassis - to which a first, "upper" rolling piston (6) is fastened, and a second, "lower" rolling piston (8) which is arranged with a variable spacing to said first, "upper" rolling piston (6),
with in each case one end of a double rolling bellows (10) being clamped in a pressure-tight manner to the "lower" end of the "upper" rolling piston (6) and to the "upper" end of the "lower" rolling piston (8), and
a foamed material part (16) which is arranged in the region of the "upper" rolled fold (10a) which is present between the "upper" rolling piston (6) and the rolling bellows (10),
**characterized by**
the use of the foamed material part (16) as a dirt collector, and
in that the foamed material part (16) is embodied as a ring which is fastened to the outer wall of the bellows (10) and which bears elastically against the vehicle chassis.

2. Double rolling bellows air spring according to Claim 1,
**characterized**
**in that** the foamed material of the foamed material part (16) is open-pored.

3. Double rolling bellows air spring according to one of Claims 2 to 3,
**characterized**
**in that** the encircling web (18) is a constituent part of the sheet metal structure of a chassis connection or of an over-roll ring (20).

4. Double rolling bellows air spring according to Claim 2 to 4,
**characterized**
**in that** both the ring (16) and the web (18) are formed so as to be rotationally symmetrical or not rotationally symmetrical about the air spring longitudinal axis (14).

5. Double rolling bellows air spring (2),
composed of an air spring cover (4) - which is in particular fixed to the chassis - to which a first, "upper" rolling piston (6) is fastened, and a second, "lower" rolling piston (8) which is arranged with a variable spacing to said first, "upper" rolling piston (6),
with in each case one end of a double rolling bellows (10) being clamped in a pressure-tight manner to the "lower" end of the "upper" rolling piston (6) and to the "upper" end of the "lower" rolling piston (8), and
a foamed material part (16) which is arranged in the region of the "upper" rolled fold (10a) which is present between the "upper" rolling piston (6) and the rolling bellows (10),
**characterized by**
the use of the foamed material part (16) as a dirt collector, and
in that the foamed material of the foamed material part (16) is open-pored.

6. Double rolling bellows air spring according to Claim 5,
**characterized**
**in that** the foamed material part (16) is arranged as an insert part between the bellows (10) and a web (18) which encircles the bellows (10).

7. Double rolling bellows air spring according to Claim 5,
**characterized**
**in that** the foamed material part (16) is embodied as a ring which is fastened to the outer wall of the bellows (10) and which bears elastically against the vehicle chassis.

8. Double rolling bellows air spring according to one of Claims 5 to 7,
**characterized**
**in that** the encircling web (18) is a constituent part of the sheet metal structure of a chassis connection or of an over-roll ring (20).

9. Double rolling bellows air spring according to Claim 5 or 8,
**characterized**
**in that** both the ring (16) and the web (18) are formed so as to be rotationally symmetrical or not rotationally symmetrical about the air spring longitudinal axis (14).

## Revendications

1. Amortisseur pneumatique à double soufflet roulant (2), se composant d'un couvercle d'amortisseur pneumatique (4) - en particulier solidaire du châssis - auquel un premier piston de déroulement "supérieur" (6) est fixé, et d'un deuxième piston de déroulement "inférieur" (8) disposé à une distance variable du premier, dans lequel une extrémité d'un double soufflet roulant (10) est encastrée de façon étanche à la pression respectivement à l'extrémité "inférieure" du piston de déroulement "supérieur" (6) et à l'extrémité "supérieure" du piston de déroulement "inférieur" (8), et d'une pièce en matière alvéolaire (16), qui est disposée dans la région du pli roulant "supérieur" (10a) formé entre le piston de déroulement "supérieur" (6) et le soufflet roulant (10), **caractérisé par** l'utilisation de la pièce en matière alvéolaire (16) comme collecteur de salissures, et en ce que la pièce en matière alvéolaire (16) a une forme d'anneau, qui est fixé à la paroi extérieure du soufflet (10) et qui s'applique élastiquement sur le châssis du véhicule.

2. Amortisseur pneumatique à double soufflet roulant selon la revendication 1, **caractérisé en ce que** la matière alvéolaire de la pièce en matière alvéolaire (16) est une matière à pores ouverts.

3. Amortisseur pneumatique à double soufflet roulant selon l'une des revendications 2 à 3, **caractérisé en ce que** la nervure périphérique (18) fait partie de la structure en tôle d'une liaison au châssis ou d'un anneau de renversement (20).

4. Amortisseur pneumatique à double soufflet roulant selon l'une quelconque des revendications 2 à 4, **caractérisé en ce qu'**aussi bien l'anneau (16) que la nervure (18) sont symétriques de rotation ou ne sont pas symétriques de rotation autour de l'axe longitudinal (14) de l'amortisseur pneumatique.

5. Amortisseur pneumatique à double soufflet roulant (2), se composant d'un couvercle d'amortisseur pneumatique (4) - en particulier solidaire du châssis - auquel un premier piston de déroulement "supérieur" (6) est fixé, et d'un deuxième piston de déroulement "inférieur" (8) disposé à une distance variable du premier, dans lequel une extrémité d'un double soufflet roulant (10) est encastrée de façon étanche à la pression respectivement à l'extrémité "inférieure" du piston de déroulement "supérieur" (6) et à l'extrémité "supérieure" du piston de déroulement "inférieur" (8), et d'une pièce en matière alvéolaire (16), qui est disposée dans la région du pli roulant "supérieur" (10a) formé entre le piston de déroulement "supérieur" (6) et le soufflet roulant (10), **caractérisé par** l'utilisation de la pièce en matière alvéolaire (16) comme collecteur de salissures, et en ce que la matière alvéolaire de la pièce en matière alvéolaire (16) présente des pores ouverts.

6. Amortisseur pneumatique à double soufflet roulant selon la revendication 5, **caractérisé en ce que** la pièce en matière alvéolaire (16) est une pièce insérée entre le soufflet (10) et une nervure (18) entourant le soufflet (10).

7. Amortisseur pneumatique à double soufflet roulant selon la revendication 5, **caractérisé en ce que** la pièce en matière alvéolaire (16) est un anneau, qui est fixé à la paroi extérieure du soufflet (10) et qui s'applique élastiquement sur le châssis du véhicule.

8. Amortisseur pneumatique à double soufflet roulant selon l'une des revendications 5 à 7, **caractérisé en ce que** la nervure périphérique (18) fait partie de la structure en tôle d'une liaison au châssis ou d'un anneau de renversement (20).

9. Amortisseur pneumatique à double soufflet roulant selon la revendication 5 ou 8, **caractérisé en ce qu'**aussi bien l'anneau (16) que la nervure (18) sont symétriques de rotation ou ne sont pas symétriques de rotation autour de l'axe longitudinal (14) de l'amortisseur pneumatique.
